# EUROPEAN PATENT APPLICATION

(11) **EP 4 650 018 A1**
(43) Date of publication of application: **19.11.2025**
(21) Application number: 25173166.7
(22) Date of filing: 29.04.2025
(51) Int. Cl.: A63F 13/355, A63F 13/52, A63F 13/67, H04N 19/132, H04N 19/172

(54) **GAMEPLAY VIDEO ENCODING SYSTEM AND METHOD**

(30) Priority: 15.05.2024 GB 202406868
(71) Applicant: Sony Interactive Entertainment Inc., Tokyo 108-0075 (JP)
(72) Inventor: BIGOS, Andrew James, London, W1F 7LP (GB); SANDERS, Matthew William, London, W1F 7LP (GB); MOTILLA, Daniel Montero, London, W1F 7LP (GB); BARMAN, Nabajeet, London, W1F 7LP (GB); ZADTOOTAGHAJ, Saman, London, W1F 7LP (GB)
(74) Representative: D Young & Co LLP

(57) **Abstract**

An encoding system configured to encode video of a game being executed, the video being encoded for transmission to a client device operated by a player of the game, the system comprising a game execution unit configured to execute the game, wherein executing the game comprises rendering a plurality of image frames for display to the player, a game information obtaining unit configured to obtain information about the execution of the game, including obtaining information, corresponding to an image frame currently being rendered, from one or more intermediate rendering buffers, a complexity estimation unit configured to estimate a spatial and/or temporal complexity of the image frame being rendered in dependence upon the obtained information, a parameter selection unit configured to select one or more encoding parameters in dependence upon the estimated spatial and/or temporal complexity, and an encoding unit configured to encode the video of the game being executed using the selected encoding parameters, the encoded video comprising the plurality of image frames for display to the player.

## Description

### BACKGROUND OF THE INVENTION

### Field of the invention

This disclosure relates to a gameplay video encoding system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

While traditionally video games have been played using a local games console or other processing device (such as a personal computer or mobile phone), for many users the ability to leverage processing capabilities of a remote device and instead stream gameplay video to a local device has become increasingly appealing.

For some users, this can be achieved by using an in-home streaming arrangement in which a powerful processing device (such as a games console or personal computer) is used to execute a game; the video output of this game can then be streamed over a local network to a less-powerful processing device, such as a tablet computer, mobile phone, or handheld gaming device. This allows a user to play content that can only be executed (or at least executed with high visual quality) by the more powerful processing device (due to system requirements, for instance), without being tied to the location or form factor of that device.

In some cases, a user may not have access to or wish to make use of a powerful local processing device. In this case, a user may instead stream gameplay video from a remote source - this can be a games console or the like in another location, for example, or a cloud gaming server. In any case, it is expected that gameplay video is received by the user's device, such as a mobile phone or portable device, via the internet.

To ensure that a user is able to experience a good quality of gameplay in streaming arrangements it is important that the gameplay video is received with low latency and high visual quality. This enables a user to respond to events within the games in a timely manner, as well as to view content with a good level of detail. In view of this, it is considered that an efficient and effective video encoding scheme should be utilised to improve the latency and visual quality associated with a stream.

It is in the context of the above discussion that the present disclosure arises.

### SUMMARY OF THE INVENTION

This disclosure is defined by claim 1. Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an entertainment system;
Figure 2 schematically illustrates a video streaming system;
Figure 3 schematically illustrates a video encoding method;
Figure 4 schematically illustrates an encoding system; and
Figure 5 schematically illustrates an encoding method.

### DESCRIPTION OF THE EMBODIMENTS

Referring now to the drawings, wherein like reference numerals designate identical or corresponding parts throughout the several views, embodiments of the present disclosure are described.

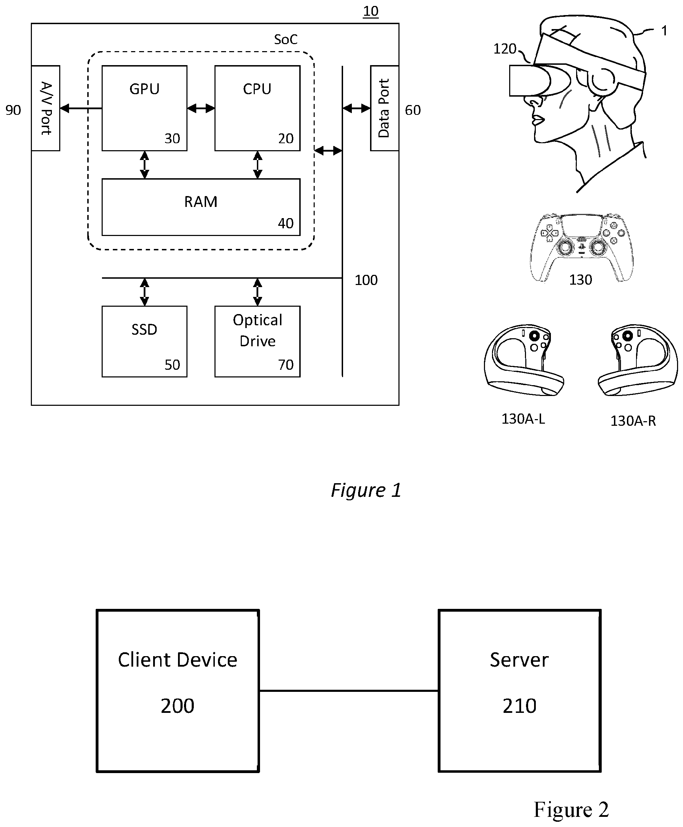

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L,R) in the case of the HMD.

Figure 2 schematically illustrates a streaming system in accordance with implementations of the present disclosure. In this Figure, a single client device 200 is shown in communication via a network (represented by the line) with a server 210. Of course, in practice a plurality of client devices may be in communication with a single server, and a client device may be in communication with multiple servers at the same time. While referred to here as a 'server', the unit 210 may be any suitable processing device which is configured to execute a video game and provide video of the gameplay to another device via a network or internet connection.

The client device 200 may be implemented as an entertainment device 100 as shown in Figure 1, for example, or any other processing hardware. Examples of client devices include games consoles, mobile phones, other portable devices, computers, televisions, and laptops.

The server 210 may be implemented using any suitable processing hardware, and may include any suitable configuration of CPUs and/or GPUs required to execute a game to generate the video content to be streamed to the client device. Of course, the server 210 should also include communication means to enable communication with the client device 200 over the network connection.

Typically, a game streaming arrangement executes a video game to generate images for display based upon received inputs from the client device. These generated images are then encoded in real-time into a video stream for transmission to the client device, where the video is to be displayed to a user (who then views the video, and provides inputs to control the gameplay).

When encoding any video for transmission, it is considered advantageous if the bitstream can be reduced in size while maintaining image quality so as to aid efficiency or reduce the required bandwidth to enable transmission via a slower network connection. While this can be implemented effectively for pre-generated video, such as video-on-demand content, this is due to the content being available in advance for processing prior to being transmitted to client devices.

One such example of this is the use of complexity estimation as an indication of how much compression may be realised when encoding video, and the quality trade-off therein. The compressibility of content is considered as this influences the bitrate of the encoded video - when using the same settings, a more complex (and therefore less compressible) video sequence would require a higher bitrate for encoding at a given quality level as compared to a sequences of lower complexity due to the reduced level of redundancy that is able to be exploited between frames, for instance.

Complexity for video encoding consists of two different aspects - spatial complexity and temporal complexity. Spatial complexity is a measure of the amount of detail present within a frame, such that content with large areas of relatively uniform content (such as the pitch in a football match) are considered to have a low degree of complexity. Meanwhile, temporal complexity is a measure of the amount of movement between frames; as such, video comprising objects that have a high velocity are typically considered to have a higher temporal complexity. The degree of complexity can be quantified in any suitable manner, with one approach being the use of energy functions for this purpose.

While this can be applied to pre-generated videos, such an approach is not particularly suitable for the streaming of video game content due to the fact that it is generated in real time in response to user inputs. Given the sensitivity of such an application to latency, the increased time required for this complexity analysis to be performed would not be considered desirable.

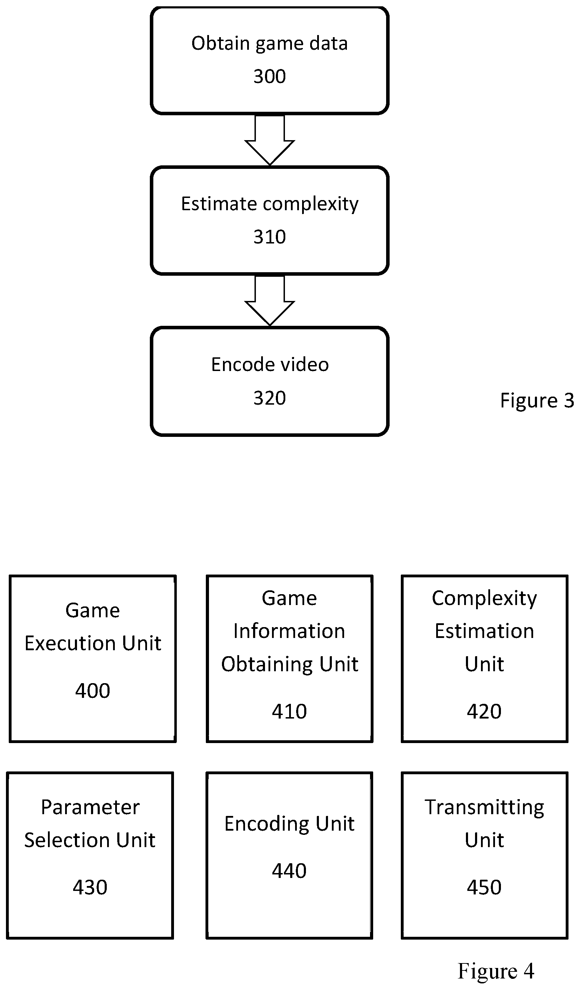

Figure 3 schematically illustrates a method which seeks to provide the benefits of such a process in the context of video game streams, which would otherwise not be considered a suitable source of content for such a process. Different aspects of this method are discussed in more detail below, with the method of Figure 3 providing a broad outline of the approach taken.

A step 300 comprises obtaining game data from the game itself; in other words, obtaining data from the source of the video content rather than obtaining data about the video content itself. The obtained data can encompass any information that can be used to estimate the complexity of the generated video; identifying information for the game or a current segment of the game, graphics settings, difficulty levels, or information used to render images (such as the contents of intermediate rendering buffers in the rendering pipeline).

A step 310 comprises estimating the complexity of video frames being rendered in dependence upon the obtained game data. This may utilise a predefined algorithm, which may be specific to particular games or genres (for example), which weights various factors defined by the game data obtained in step 300 to estimate complexity. Alternatively, or in addition, a trained machine learning model may be used to derive an estimated complexity on the basis of the information obtained in step 300. This may include an overall complexity estimate, and/or individual estimates of the spatial complexity and/or the temporal complexity. These estimates may be derived on a frame-by-frame basis for each frame or a subset of frames (such as every second or third frame), or may be generated for a group of frames (or indeed partial frames) as appropriate for a given implementation. In addition, information from the N previously encoded frames (where N can be any integer ≥ 1), their actual complexity, and the prediction accuracy (for instance, considering the predicted complexity minus the actual complexity for a given frame) can be used in addition to improve the prediction accuracy over time.

A step 320 comprises encoding a video of the game being played using encoding parameters that are selected in dependence upon the estimated complexity (or complexities) generated in step 310. In the case that the estimated complexity is high, the encoding parameters may be selected to compensate for this by reducing an image resolution (for example) to maintain a target bitrate or remain below a threshold bitrate (for example, a threshold imposed by a measured or predicted client bandwidth).

By using a method in accordance with that of Figure 3, data output by the game itself can be used for a complexity estimation rather than relying on the generated video itself. This means that the advantages of complexity estimation with encoding may be realised without adding a significant latency burden to the video streaming process.

By utilising game data it is possible to infer or predict the complexity of images without access to the rendered result; this can be based upon high-level information about a game (referred to here as game metadata), or information obtained from the game engine (such as intermediate rendering buffers).

For instance, particular games or genres of games may be associated with particular complexity values. As an example, football games may typically be associated with low spatial complexity but high temporal complexity as a large proportion of the rendered images correspond to the pitch - but the movement of the players and/or the ball can be quick and constant, leading to a more temporally complex video. Similarly, different levels of a game or activities within a game may be associated with different complexity values - a fishing minigame may have lower levels of complexity than a fighting segment of the game, for example. Any information about what the events taking place within the game include may be utilised in a similar manner.

A user's settings may also have an impact on the complexity of the gameplay video; for example, a higher difficulty may be associated with more frenetic fight scenes due to greater numbers of enemies or enemies with greater speeds. This would be expected to correspond to an increase in spatial and temporal complexity, as the screen would likely appear more congested (due to displaying more enemies) and/or the motion between images would be greater. The graphics settings chosen by a user may also cause the complexity to change; for example, lower graphics settings may use simplified textures (or reduced resolutions, thereby showing less detail of the textures) which can lower the spatial complexity. An increased frame rate may reduce the temporal complexity, as the amount of motion between frames would be reduced due to more frames being used to represent the same motion.

These are all examples of data which can be obtained without reference to the game engine or specific rendering information, and as such are all considered examples of game metadata.

Turning to the use of data from the game engine, estimates of the spatial complexity may be based upon the contents of any material-related buffers. These are buffers which relate to the visual properties of specific objects within a scene being rendered, with examples of buffers including those detailing normals, roughness, or metalness. Based upon the contents of these buffers, a spatial complexity of a resultant image can be inferred or predicted. For instance, if a normal buffer comprises a range of different values this would represent a more complex shape - and therefore likely to lead to an increased spatial complexity in a rendered image.

Estimates of the temporal complexity may be based upon any buffer which includes information about motion within an image. For instance, the velocity (motion vector) buffer comprises information which details how much each pixel in the current frame has moved with respect to the previous frame - this is therefore a reliable measure of the temporal complexity, as these vectors correlate directly with the motion between image frames. As such, should the velocity buffer comprise a high number of motion vectors having significant values (that is, values indicative of significant motion) then this would correlate with a high level of temporal complexity. Of course, the definition of 'significant' may be determined freely in accordance with a particular implementation. A depth buffer may also be suggestive of motion within an image, as far-away objects would be expected to move less within an image than those objects nearer to the virtual camera, and as such can be used as a proxy for estimating temporal complexity.

Of course these are only examples of the information that can be obtained from the game engine to aid the estimation of spatial and/or temporal complexity. Any information which would be expected to correlate with such complexity may be considered; for instance, obtaining information about the number of objects in the game, in a scene, or in a typical scene (that is, an average number of objects per image frame for a game) may be considered useful for estimating spatial complexity. The occurrence of events in the game, or changes to the music being played, may also be used to infer a context for the image being rendered and a likely resulting complexity. For instance, music which has a higher beats-per-minute may correlate with a higher temporal complexity on the basis that the player is likely to be under a time pressure or the like and so move more quickly and/or erratically.

In some cases, it may be considered advantageous to use historical data to further refine the complexity estimation process. For instance, the estimated complexity for a number (such as 1, 10, 30, 60, or 100) of frames preceding the frame currently being rendered may be stored and referenced. In some implementations, it may be considered advantageous to calculate a measure of complexity based upon the previously rendered images for use in place of the estimates.

Information about the complexity (estimated or otherwise) of preceding frames may be used as a baseline for complexity estimation - for instance, a rolling average of the complexity of previous frames may be used as an indicator for the expected complexity of the current frame, as the complexity is unlikely to vary significantly between individual frames or small groups of frames (such as between a first five frames and the subsequent five frames) except during scene changes or the like.

When calculating the complexity of the frames after rendering, an analysis can be performed which indicates the accuracy of the complexity estimation for each of those frames; in other words, the complexity estimation can be compared to the calculated complexity to identify any deviations between the two. In view of this, a tolerance can be applied to future complexity estimations (such as adding a percentage value to the estimated complexity) to enable the encoding parameters to be selected in a manner that accounts for complexity possibly being higher than estimates would indicate.

While implementations according to the present disclosure can utilise an algorithm defined by a content creator or developer to perform the complexity estimation, it may be considered advantageous in some cases to utilise a machine learning model which is trained to perform a complexity estimation. Any suitable method of training such a model may be utilised, rather than being limited to specific types. One example of a suitable approach is that of unsupervised learning.

In such an approach, the dataset used for the training can be associated sets of data from previous gameplay videos. This dataset may comprise video (or individual image frames) associated with the gameplay along with any data which would be available to the complexity estimator during use - and as such may include game metadata, data from the game engine, and information about the complexity of previous frames as appropriate. The video or image frames may be used to calculate a value for the complexity of a given frame; however in some cases it may be preferable to instead (or additionally) provide a calculated complexity value which can be used directly.

Based upon such a dataset, a model can be trained to identify a complexity from the game-related data (game metadata and data from the game engine) and optionally the complexity information associated with preceding frames. By providing calculated complexity values for different frames within the dataset, the results of a complexity estimation by the model can be compared to the actual result to determine their accuracy. This therefore enables feedback to be generated which indicates whether the model is successful or not.

In line with the above discussion of the general approach and an appropriate dataset, any suitable machine learning model may be trained to perform the complexity estimation.

Once the complexity estimation has been performed, corresponding encoding parameters are able to be selected in dependence upon the complexity estimation. This may also be performed by either a predefined algorithm (for instance, one defined by the developer of a gameplay streaming platform or of a particular game), or by utilising a further trained machine learning model (or expanding the existing one to include a complexity estimation and encoding parameter selection).

Encoding parameters are typically selected so as to enable the best possible resolution or frame rate, or a target bitrate, to be achieved, for example, although the selection may be performed so as to optimise any video property as desired. Constraints which may be considered when selecting the encoding parameters include the resolution able to be displayed by a client device, the available streaming bandwidth, and the rendered game bandwidth.

While a relationship between the estimated complexity and the encoding parameters may be defined by a developer so as to enable an algorithm to be applied to the complexity estimations to obtain the encoding parameters, a trained machine learning model may be preferred. Such a model may be trained using a dataset comprising estimated (and/or calculated) complexities for frames along with encoding parameters which are considered to be 'optimal'. In some cases, the dataset may further comprise the game-related data for those frames (or indeed the full dataset used for training the complexity estimation model described above).

The encoding parameters which are considered to be 'optimal' are parameters which have been selected by a developer as representative of the best possible encoding for the content. These may be the parameters which, within the imposed constraints, offer the best value for a given aspect of the video (such as a highest resolution); alternatively these may be the parameters which lead to a video which is judged to have the highest video quality. The video quality may be measured by a trained machine learning model, for instance, or may be selected based upon the preferences of a developer or a corpus of viewers who assign a rating or otherwise vote upon a selection of differently-encoded versions of the same video.

However the optimal encoding parameters are determined for videos or video frames represented by the dataset, it is considered that a model may be trained to learn a correspondence between these parameters and data including frame complexity and optionally the additional game-related data and the like.

In some implementations it is considered suitable to use an encoding parameter selection process which is typically used for video-on-demand applications or the like rather than determining a game-specific model. By using the estimated complexity generated in accordance with the above discussion, an existing encoding parameter selection process may be able to be modified to operate in real-time on a frame-by-frame basis.

Figure 4 schematically illustrates an encoding system configured to encode video of a game being executed, the video being encoded for transmission to a client device operated by a player of the game. The system comprises a game execution unit 400, a game information obtaining unit 410, a complexity estimation unit 420, a parameter selection unit 430, an encoding unit 440, and a transmitting unit 450. These units may be implemented using any suitable processing hardware (such as one or more CPUs and/or GPUs) located within a device for remotely executing gameplay - such as the server 210 of Figure 2.

The game execution unit 400 is configured to execute the game, wherein executing the game comprises rendering a plurality of image frames for display to the player. The game execution unit 400 is further configured to receive inputs from the player to control the gameplay, for instance over a network connection which enables communication between the game execution unit 400 (exemplified by a cloud gaming server or remote games console) and the client device associated with the player.

The game information obtaining unit 410 is configured to obtain information about the execution of the game, including obtaining information, corresponding to an image frame currently being rendered, from one or more intermediate rendering buffers. The one or more intermediate rendering buffers may include one or more of a velocity buffer, a depth buffer, a normal buffer, a roughness buffer, and a metalness buffer, which can comprise information about (or suggestive of) the spatial and/or temporal complexity of the image frame.

In addition to this intermediate buffer information, the game information obtaining unit 410 may be configured to obtain information any other information output by the game engine. This can include event information, for example, or information which more directly characterises the image frame for the purpose of complexity estimation. For instance, a game engine could be configured to provide information about the type of enemies present, or the type of challenges being undertaken by a user; this may be explicit information, or information representative of this such as a flag indicating high or low spatial complexity and/or temporal complexity.

The game information obtaining unit 410 may also be configured to obtain information about the game being executed - this may be the game itself, or one or more higher-level parameters associated with the game (rather than details about the rendering itself). For instance, the obtained information about the game being executed may include one or more of a title of the game, a current level being played, a genre associated with the game, a difficulty setting associated with the game, and one or more graphics settings associated with the game. Each of these may be used to improve the complexity estimation, particularly in conjunction with an external database or the like which comprises complexity information with a correlation to these factors - such as an average complexity having been calculated for a given game and used as a baseline.

The complexity estimation unit 420 is configured to estimate a spatial and/or temporal complexity of the image frame being rendered in dependence upon the obtained information. This may be performed by inputting the obtained information into an algorithm which estimates a complexity, for example. Alternatively, the complexity estimation unit 420 may be configured to use a trained machine learning model to estimate the spatial and/or temporal complexity of the image frame being rendered. While in many cases both the spatial and temporal complexity of the image frame being rendered may be estimated, benefits are still able to be obtained by estimating a single one of these and selecting encoding parameters based upon this. For instance, if a particular game is known to have a low spatial complexity then the encoding parameters may be selected on the basis of the temporal complexity estimation only.

In some implementations, the complexity estimation unit 420 may be configured to obtain complexity information for one or more frames preceding the frame currently being rendered and to use this complexity information when estimating the spatial and/or temporal complexity of the image frame being rendered. This obtained complexity information may be earlier estimations, or may include calculated measures of complexity which are determined after the rendering of the respective frame or frames. In some cases, a mixed approach may be utilised in which more recent frames are associated with an estimation so as to enable time for the calculations of the complexity to be performed.

The parameter selection unit 430 is configured to select one or more encoding parameters in dependence upon the estimated spatial and/or temporal complexity; the one or more encoding parameters may include one or more of a resolution, bitrate, framerate, and bit-depth, for example. Typically, the parameter selection unit 430 would be configured to select encoding parameters associated with a reduced video quality in response to the complexity estimation unit estimating an increased complexity for the image frame being rendered; in other words, the encoding parameters are expected to cause the quality of the video to be inversely proportional to the estimated complexity.

The parameter selection unit 430 may be configured to select encoding parameters which are also used to encode a plurality of image frames following the image frame currently being rendered, such that encoding parameters are selected for every Nth image frame where N is an integer greater than one. In other words, encoding parameters may be defined for groups of frames so as to avoid modifying the encoding parameters too frequently should the complexity change significantly in a small period of time. This can result in an improved viewing experience for the player, as they the frequency of changes to the video quality is reduced. This can also improve encoder efficiency, as the parameters are updated less frequently.

Alternatively, or in addition, the parameter selection unit 430 may be configured to select encoding parameters in dependence upon the complexity of one or more image frames preceding the image frame currently being rendered in addition to the estimated complexity of the image frame currently being rendered. This can enable a smoothing of the changes to the encoding parameters, as the complexity may be calculated as a rolling average or the like. This can reduce the impact of any erroneous estimations or the like, as well as result in a smoother operation of the encoder due to less significant parameter changes in any given change.

In some implementations, the parameter selection unit 430 may be configured to obtain and utilise information about a client device used by a player when determining suitable encoding parameters. This can include information such as a display size or display type, each of which may cause particular changes to encoding parameters to be more or less noticeable. For instance, a user with a smaller display size would be less likely to notice a reduction in image resolution.

The encoding unit 440 is configured to encode the video of the game being executed using the selected encoding parameters, the encoded video comprising the plurality of image frames for display to the player.

The transmitting unit 450 is configured to transmit the encoded video to a client device configured to display the video to a player. Optionally, the encoded video may be sent to one or more spectators simultaneously although in some cases it may be preferred that a time delay is introduced to prevent spectators from receiving real-time updates about the players gameplay (which can cause problems in multiplayer games, for instance).

The arrangement of Figure 4 is an example of a processor (for example, a GPU and/or CPU located in a games console, cloud gaming server, or any other computing device configured to host gaming for a remote device) that is operable to encode video of a game being executed, the video being encoded for transmission to a client device operated by a player of the game, and in particular is operable to:
execute the game, wherein executing the game comprises rendering a plurality of image frames for display to the player;
obtain information about the execution of the game, including obtaining information, corresponding to an image frame currently being rendered, from one or more intermediate rendering buffers;
estimate a spatial and/or temporal complexity of the image frame being rendered in dependence upon the obtained information;
select one or more encoding parameters in dependence upon the estimated spatial and/or temporal complexity;
encode the video of the game being executed using the selected encoding parameters, the encoded video comprising the plurality of image frames for display to the player; and
transmit the encoded video to a client device configured to display the video to a player.

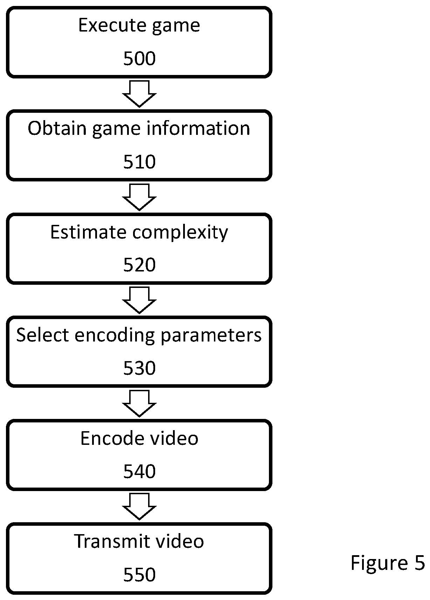

Figure 5 schematically illustrates an encoding method for encoding video of a game being executed, the video being encoded for transmission to a client device operated by a player of the game. This may be implemented in accordance with the discussion of the method of Figure 3, for example, and the system of Figure 4.

A step 500 comprises executing the game, wherein executing the game comprises rendering a plurality of image frames for display to the player.

A step 510 comprises obtaining information about the execution of the game, including obtaining information, corresponding to an image frame currently being rendered, from one or more intermediate rendering buffers.

A step 520 comprises estimating a spatial and/or temporal complexity of the image frame being rendered in dependence upon the obtained information.

A step 530 comprises selecting one or more encoding parameters in dependence upon the estimated spatial and/or temporal complexity.

A step 540 comprises encoding the video of the game being executed using the selected encoding parameters, the encoded video comprising the plurality of image frames for display to the player.

A step 550 comprises transmitting the encoded video to a client device configured to display the video to a player.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An encoding system configured to encode video of a game being executed, the video being encoded for transmission to a client device operated by a player of the game, the system comprising:
a game execution unit configured to execute the game, wherein executing the game comprises rendering a plurality of image frames for display to the player;
a game information obtaining unit configured to obtain information about the execution of the game, including obtaining information, corresponding to an image frame currently being rendered, from one or more intermediate rendering buffers;
a complexity estimation unit configured to estimate a spatial and/or temporal complexity of the image frame being rendered in dependence upon the obtained information;
a parameter selection unit configured to select one or more encoding parameters in dependence upon the estimated spatial and/or temporal complexity; and
an encoding unit configured to encode the video of the game being executed using the selected encoding parameters, the encoded video comprising the plurality of image frames for display to the player.

2. A system according to claim 1, wherein the game information obtaining unit is configured to obtain information about the game being executed.

3. A system according to claim 2, wherein the obtained information about the game being executed includes one or more of a title of the game, a current level being played, a genre associated with the game, a difficulty setting associated with the game, and one or more graphics settings associated with the game.

4. A system according to any preceding claim, wherein the game information obtaining unit is configured to obtain information output by the game engine.

5. A system according to any preceding claim, wherein the one or more intermediate rendering buffers include one or more of a velocity buffer, a depth buffer, a normal buffer, a roughness buffer, and a metalness buffer.

6. A system according to any preceding claim, wherein the complexity estimation unit is configured to obtain complexity information for one or more frames preceding the frame currently being rendered and to use this complexity information when estimating the spatial and/or temporal complexity of the image frame being rendered.

7. A system according to any preceding claim, wherein the complexity estimation unit is configured to use a trained machine learning model to estimate the spatial and/or temporal complexity of the image frame being rendered.

8. A system according to any preceding claim, wherein the one or more encoding parameters include one or more of a resolution, bitrate, framerate, and bit-depth.

9. A system according to any preceding claim, wherein the parameter selection unit is configured to select encoding parameters associated with a reduced video quality in response to the complexity estimation unit estimating an increased complexity for the image frame being rendered.

10. A system according to any preceding claim, wherein the parameter selection unit is configured to select encoding parameters which are also used to encode a plurality of image frames following the image frame currently being rendered, such that encoding parameters are selected for every Nth image frame where N is an integer greater than one.

11. A system according to any preceding claim, wherein the parameter selection unit is configured to select encoding parameters in dependence upon the complexity of one or more image frames preceding the image frame currently being rendered in addition to the estimated complexity of the image frame currently being rendered.

12. A system according to any preceding claim, comprising a transmitting unit configured to transmit the encoded video to a client device configured to display the video to a player.

13. An encoding method for encoding video of a game being executed, the video being encoded for transmission to a client device operated by a player of the game, the method comprising:
executing the game, wherein executing the game comprises rendering a plurality of image frames for display to the player;
obtaining information about the execution of the game, including obtaining information, corresponding to an image frame currently being rendered, from one or more intermediate rendering buffers;
estimating a spatial and/or temporal complexity of the image frame being rendered in dependence upon the obtained information;
selecting one or more encoding parameters in dependence upon the estimated spatial and/or temporal complexity; and
encoding the video of the game being executed using the selected encoding parameters, the encoded video comprising the plurality of image frames for display to the player.

14. Computer software comprising instructions which, when the software is executed by a computer, causes the computer to carry out the method of claim 13.

15. A non-transitory machine-readable storage medium which stores computer software according to claim 14.
